# FASCICULE DE BREVET EUROPEEN

(11) **EP 2 705 219 B1**
(45) Date de publication et mention de la délivrance du brevet: **28.01.2015**
(21) Numéro de dépôt: 12725106.4
(22) Date de dépôt: 04.05.2012
(51) Int. Cl.: F02C 7/12, F01D 9/04, F01D 5/18, F01D 5/30

(54) **DISTRIBUTEUR DE TURBINE DANS UNE TURBOMACHINE**
TURBINENDÜSENLEITSCHAUFELANORDNUNG IN EINER TURBOMASCHINE
TURBINE NOZZLE GUIDE VANE ASSEMBLY IN A TURBOMACHINE

(30) Priorité: 06.05.2011 FR 1153928
(43) Date de publication de la demande: 12.03.2014
(73) Titulaire: SNECMA, 75015 Paris (FR)
(72) Inventeur: SANDELIS, Denis, Jean, Maurice, F-77550 Moissy Cramayel Cedex (FR); HERNANDEZ, Didier, Hippolyte, F-77550 Moissy Cramayel Cedex (FR)
(74) Mandataire: Jolly, Christophe
(86) Numéro de dépôt international: PCT/FR2012/051000
(87) Numéro de publication internationale: WO 2012/153049

(56) Documents cités:
- EP-A2- 1 522 679
- DE-A1-102005 024 696
- GB-A- 2 455 899
- US-A1- 2005 281 663
- US-A1- 2010 129 196

## Description

L'invention concerne un distributeur de turbine dans une turbomachine telle qu'un turboréacteur ou un turbopropulseur.

Classiquement, une turbomachine comprend d'amont en aval un compresseur alimentant en air une chambre de combustion éjectant les gaz brulés dans une turbine haute pression. La turbine haute pression comprend au moins un distributeur suivi d'une roue de turbine. Ce distributeur est sectorisé et comprend deux plates-formes interne et externe entre lesquelles s'étendent des pales sensiblement radiales Le distributeur assure un guidage optimal vers la roue des gaz brulés sortant de la chambre de combustion.

En fonctionnement, on observe que la température des gaz brulés issus de la chambre de combustion n'est pas circonférentiellement uniforme, ce qui donne lieu à la formation de points chauds sur le distributeur d'entrée de la turbine haute pression. Pour remédier à cette difficulté, il est connu de former des orifices traversants au voisinage amont des plates-formes interne et externe du distributeur d'entrée, ces orifices étant répartis sur la circonférence de chaque plate-forme et permettant une réintroduction d'air de contournement de la chambre à l'intérieur de la turbine haute pression. Ces flux d'air permettent un refroidissement des extrémités amont des plates-formes interne et externe et une uniformisation de la température circonférentielle en entrée du distributeur.

Toutefois, ce type de technologie n'est pas satisfaisant puisque l'air traversant les plates-formes interne et externe à une vitesse relativement grande conduisant à une pénétration radiale importante de d'air entre les plates-formes interne et externe du distributeur. Il en résulte que cet air de refroidissement est mélangé très rapidement aux gaz chauds issus de la chambre de combustion et ne peut assurer un refroidissement optimal des plates-formes interne et externe.

L' état de la technique est presenté dans le document US 2005/0281663.

L'invention a notamment pour but d'apporter une solution simple, efficace et économique à ce problème.

A cette fin, elle propose un distributeur sectorisé pour une turbine de turbomachine comprenant deux plates-formes annulaires sectorisées interne et externe reliées par des pales sensiblement radiales, au moins l'une de ces plates-formes comportant au voisinage de son extrémité amont une pluralité d'orifices traversants de passage d'air répartis sur la circonférence de ladite plate-forme, les orifices de passage d'air de chaque secteur de plate-forme débouchant à leurs extrémités opposées aux pales dans une cavité annulaire circonférentielle du secteur de plate-forme, cette cavité étant fermée et comportant des orifices d'alimentation en air de refroidissement, caractérisé en ce que les orifices d' alimentation sont décalés circonférentiellement en quinconce par rapport aux orifices de la plate-forme.

La formation d'une cavité annulaire fermée dans chacun des secteurs de plate-forme permet de réduire la vitesse de l'air de refroidissement sortant par les orifices de la plate-forme. Ainsi l'air de refroidissement pénètre moins à l'intérieur de la veine annulaire définie entre les plates-formes annulaires interne et externe et s'écoule au plus près de la face de la plate-forme située à l'intérieur de la veine annulaire.

Le positionnement dans la direction circonférentielle des orifices de la cavité annulaire en quinconce par rapport aux orifices de la plate-forme permet que l'air entrant par les orifices de la cavité refroidisse la plate-forme par impact d'air. Cela permet de réduire encore la vitesse de l'air pénétrant dans le distributeur pour qu'il s'écoule le long des faces internes des plates-formes.

La plate-forme d'un distributeur selon l'invention est ainsi mieux refroidie et la température du distributeur est également mieux uniformisée circonférentiellement par rapport à un distributeur de la technique antérieure.

Selon une autre caractéristique de l'invention, les orifices de la plate-forme débouchent du côté des pales en amont des bords d'attaque des pales, ce qui permet de garantir un refroidissement circonférentiellement uniforme des jonctions des bords d'attaque des pales avec la plate-forme.

Selon encore une autre caractéristique de l'invention, les orifices de la plate-forme et de la cavité annulaire de chaque secteur de distributeur sont régulièrement espacés les uns des autres de manière à avoir une réintroduction d'air entre les plates-formes interne et externe la plus uniforme possible circonférentiellement.

Dans une configuration particulière de l'invention, les axes des orifices de la plate-forme et de la cavité de chaque secteur de distributeur sont sensiblement situés dans un même plan perpendiculaire à l'axe longitudinal du distributeur.

Selon une autre caractéristique de l'invention, le nombre d'orifices de la plate-forme de chaque secteur de distributeur est égal au nombre d'orifices de la cavité de ce secteur de distributeur et les orifices de la plate-forme de chaque secteur de distributeur ont un diamètre identique au diamètre des orifices de la cavité de ce secteur, ce qui permet de répartir les pertes de charges de manière identique sur les orifices de la plate-forme et les orifices de la cavité.

La cavité peut être formée par une rainure annulaire ménagée dans l'épaisseur de la plate-forme de chaque secteur de distributeur et fermée par une tôle comprtant les orifices précités d'alimentation en air.

La tôle peut être fixée par brasage ou soudage sur deux portées cylindriques de la plate-forme de chaque secteur de distributeur, situées respectivement en amont et en aval de la cavité. Ces portées cylindriques peuvent être réalisées par usinage.

Dans une réalisation particulière de l'invention, la plate-forme de chaque secteur de distributeur comprend à son extrémité amont une paroi radiale de fixation d'un moyen d'étanchéité, la cavité étant située en aval de cette paroi radiale.

L'invention concerne également une turbomachine, telle qu'un turboréacteur ou un turbopropulseur d'avion, comprenant un distributeur de turbine tel que décrit ci-dessus et agencé en sortie d'une chambre annulaire de combustion.

D'autres avantages et caractéristiques de l'invention apparaîtront à la lecture de la description suivante faite à titre d'exemple non limitatif et en référence aux dessins annexés dans lesquels :
- la figure 1 est une vue schématique en coupe axiale d'une chambre de combustion et du premier distributeur d'une turbine haute pression selon la technique antérieure ;
- la figure 1A est une vue schématique à plus grande échelle de la zone délimitée en pointillés sur la figure 1 ;
- la figure 2 est une vue schématique en perspective et du dessus de deux plates-formes internes sectorisés du distributeur de la figure 1 ;
- la figure 3 est une vue schématique en coupe axiale de l'extrémité amont d'une plate-forme interne d'un distributeur de turbine haute pression selon l'invention ;
- la figure 4 est une vue schématique en perspective et depuis l'intérieur d'une plate-forme interne d'un distributeur selon l'invention ;
- la figure 5 est une vue schématique en perspective et selon un plan de coupe transverse de l'extrémité amont de la plate-forme interne de la figure 4.

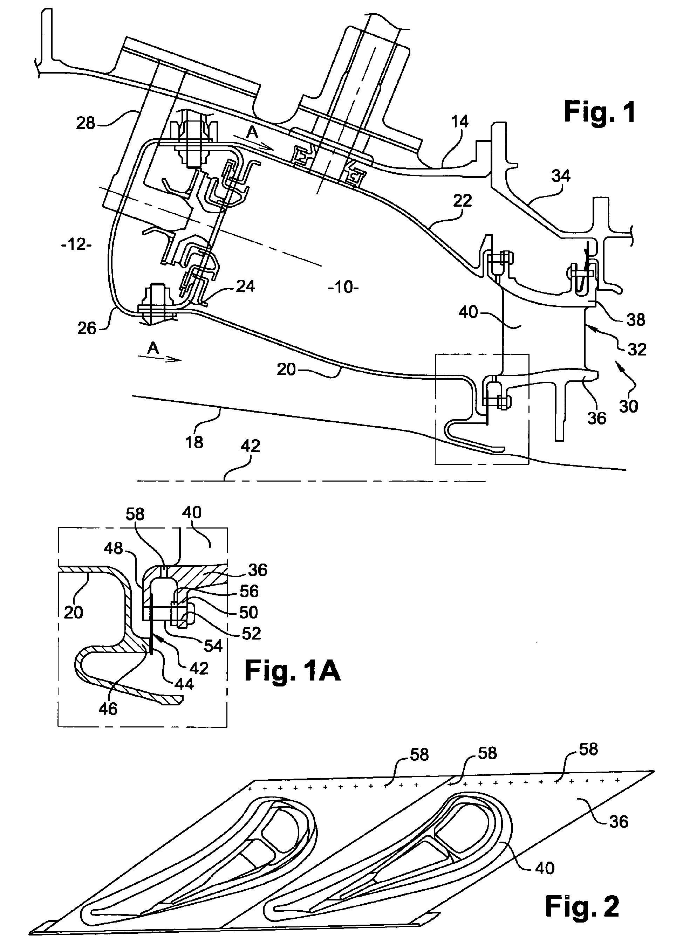

On se réfère d'abord à la figure 1 qui représente une chambre annulaire de combustion 10 selon la technique antérieure et dans laquelle un compresseur haute pression en amont (non représenté) alimente en air sous pression un espace annulaire 12 délimité par deux carters coaxiaux, l'un radialement externe 14 et l'autre radialement interne 18, et qui contient la chambre de combustion 10.

Cette chambre de combustion 10 comprend deux parois de révolution interne 20 et externe 22 coaxiales, et une paroi annulaire amont de fond de chambre 24 sur laquelle est fixé un carénage annulaire 26 qui s'étend vers l'amont.

Le carénage annulaire 26 et le fond de chambre annulaire 24 comprennent une pluralité d'ouvertures de passage d'air et de montage d'injecteurs 28 fixés extérieurement sur le carter externe 14.

La chambre de combustion 10 débouche en sortie dans une turbine haute pression 30 comprenant au moins un distributeur à aubes fixes et une roue à aubes. Sur la figure 1, seul distributeur d'entrée 32 de la turbine haute pression est représenté. Ce distributeur 32 est fixé à un carter externe 34 de turbine lui-même fixé à son extrémité amont sur l'extrémité aval du carter externe 14 de la chambre de combustion 10. Le distributeur 32 comprend des plates-formes annulaires interne 36 et externe 38 qui s'étendent l'une à l'intérieur de l'autre et qui sont reliées entre elles par des pales 40 sensiblement radiales. Ces plates-formes interne 36 et externe 38 définissent ainsi entre elles une veine annulaire d'écoulement des gaz brulés issus de la chambre de combustion 10.

Le distributeur 32 est sectorisé et formé de secteurs disposés les uns à côté des autres sur une circonférence centrée sur l'axe de révolution 42 de la chambre de combustion 10.

Les extrémités aval des parois cylindriques interne 20 et externe 22 de la chambre sont alignées et reliées par des moyens d'étanchéité aux extrémités amont des secteurs de plates-formes interne 36 et externe 38 du distributeur.

La figure 1A est une vue à plus grande échelle du moyen d'étanchéité interne qui est similaire au moyen d'étanchéité externe. Ce moyen d'étanchéité comprend des lamelles 42 qui sont disposées circonférentiellement les unes à côté des autres autour de l'axe de révolution 42 de la chambre de combustion 10, et sur lesquelles sont montés des couvre-joints (non représentés). Chaque lamelle 42 est formée par une plaque plane à orientation circonférentielle qui s'étend sensiblement vers l'amont et vers l'intérieur en position de montage. Elle est fixée par rivetage au niveau de sa partie médiane sur un secteur de distributeur et prend appui par son bord périphérique interne 44 sur une face radiale d'un rebord cylindrique 46 de l'extrémité aval de la paroi de révolution interne 20.

La plate-forme interne 36 du secteur de distributeur comporte à son extrémité amont une paroi radiale 48 et une pluralité de pattes radiales 50 espacées axialement en aval par rapport à la paroi radiale et régulièrement réparties sur la circonférence de la plate-forme interne 36. Les pattes radiales 50 comprennent des orifices 52 de passage de rivets 54 dont les extrémités amont traversent les lamelles 42 et sont logées dans des encoches de la périphérie radialement interne de la paroi radiale 48. De cette manière, les lamelles 42 sont fixées sur la paroi radiale 48.

Les lamelles 42 sont montées entre la paroi radiale et les pattes radiales et sont en appui sur la face radiale aval de la paroi radiale et sont sollicitées vers l'amont par un ressort 56 monté entre les lamelles 42 et les faces amont des pattes radiales 50 de la plate-forme interne 36.

Chaque secteur de plate-forme interne 36 comprend en amont des bords d'attaques des pales une rangée circonférentielle d'orifices 58 sensiblement radiaux traversant la plate-forme 36 (figure 2). Ces orifices 58 débouchent à l'intérieur de la veine annulaire délimitée par les plates-formes interne 36 et externe 38. Du côté de la plate-forme interne 36 opposé aux pales 40, ces orifices 58 débouchent axialement entre la paroi radiale 48 et les pattes radiales 50 de la plate-forme interne 36.

De manière similaire, chaque secteur de plate-forme externe 38 comprend des orifices débouchant sur la face externe de la plate-forme 38 entre une paroi radiale et des pattes radiales et sur la face interne de la plate-forme externe 38 en amont des bords d'attaque des pales 40.

En fonctionnement, l'air (flèches A) contournant la chambre de combustion 10 alimente les orifices 58 des plates-formes interne 36 et externe 38, respectivement, ce qui permet de refroidir ces plates-formes. Toutefois, les flux d'air traversant les plates-formes interne 36 et externe 38 ont une vitesse relativement élevée conduisant à une pénétration importante de l'air de refroidissement à l'intérieur de la veine annulaire, ce qui ne permet pas un refroidissement optimal des plates-formes du distributeur.

L'invention apporte une solution simple aux problèmes de la technique antérieure en formant une cavité 60 annulaire circonférentielle sur au moins les secteurs de plate-forme interne et/ou externe, les orifices 64 de chaque plate-forme débouchant du côté des pales en amont des bords d'attaque des pales 63 et de l'autre côté dans une cavité fermée comportant des orifices d'alimentation en air de refroidissement.

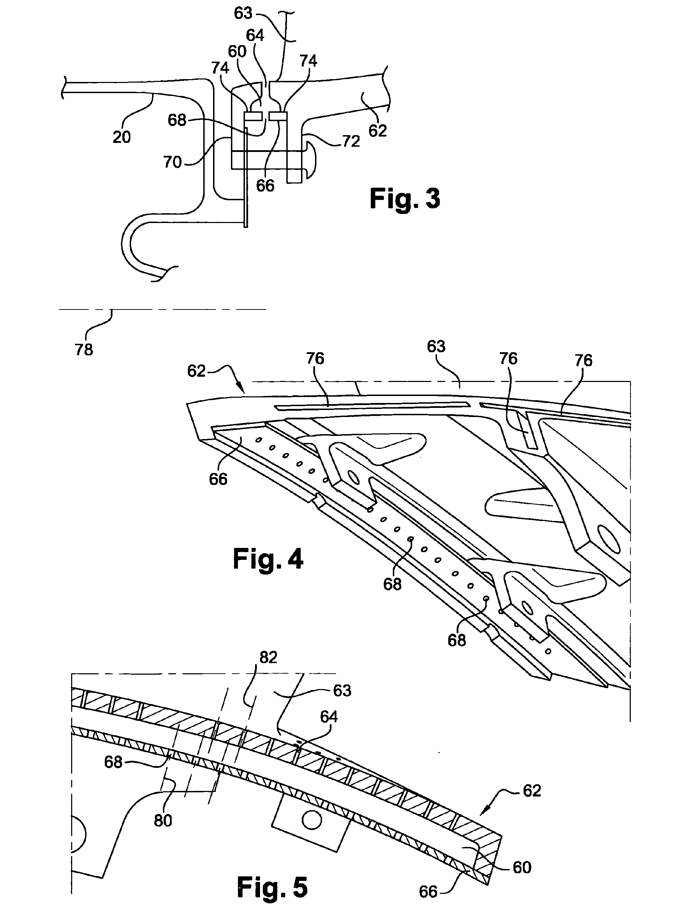

La figure 3 représente l'extrémité interne amont d'un secteur de distributeur selon l'invention, relié à l'extrémité aval de la paroi de révolution externe 20 par un joint d'étanchéité du type décrit précédemment en référence aux figures 1 et 1A.

Sur cette figure 3, la cavité est formée axialement entre une paroi radiale interne 70 de l'extrémité amont de la plate-forme interne 62 et des pattes radiales internes 72 de fixation des moyens d'étanchéité.

Cette cavité 60 est formée par usinage d'une rainure ou gorge annulaire dans l'épaisseur de chaque secteur de plate-forme interne 62 et est fermée par une tôle 66 insérée radialement entre la paroi radiale 70 et les pattes radiales 72 et fixée par brasage ou soudage sur des portées cylindriques 74 formées en amont et en aval de part et d'autre du débouché interne de la gorge 60.

Les extrémités circonférentielles de la gorge 60 sont obturées et ne débouchent pas aux extrémités circonférentielles du secteur de plate-forme 62 (figure 4). De cette manière, il est possible de conserver une jonction étanche entre deux secteurs de plates-formes en vis-à-vis par des moyens connus du type à lamelles insérées chacune pour moitié dans une fente 76 d'un bord circonférentiel d'une plate-forme d'un secteur de distributeur et pour l'autre moitié dans la fente 76 d'un bord circonférentiel en vis-à-vis d'une plate-forme d'un secteur de distributeur adjacent.

Chaque tôle 66 s'étend sur la même distance angulaire que le secteur de distributeur. Les orifices 68, 64 de la tôle 66 et de la plate-forme sont régulièrement espacés les uns des autres et leurs axes respectifs 80, 82 sont compris dans un même plan perpendiculaire à l'axe longitudinal 78 du distributeur.

Comme représenté en figure 5, les axes 80 des orifices 68 de la tôle 66 sont chacun situés dans un plan passant par l'axe longitudinal 78 du distributeur et sensiblement entre deux orifices 64 consécutifs de la plate-forme. Ce décalage en quinconce des orifices 68 de la tôle 66 par rapport aux orifices 64 de la plate-forme 62 permet un refroidissement de la plate-forme 62 par impact d'air.

Le nombre d'orifices de la plate-forme 62 de chaque secteur de distributeur peut être égal au nombre d'orifices de la tôle 66 de ce secteur de distributeur et par exemple compris entre 20 à 25.

Les orifices 68 des tôles 66 et les orifices 64 des plates-formes 62 de secteurs de distributeurs peuvent avoir un diamètre identique et de l'ordre de 0,5 à 0,6 mm.

Dans une réalisation particulière de l'invention, chaque tôle 66 peut avoir une épaisseur de l'ordre de 1 mm.

L'invention a été décrite en référence à une plate-forme interne 62 de distributeur. Toutefois, elle s'applique également aux plates-formes externes des secteurs de distributeur.

On comprend également qu'il serait possible de former des cavités circonférentielles fermées, uniquement sur les plates-formes internes ou bien uniquement sur les plates-formes externes ou encore à la fois sur les deux plates-formes annulaires interne et externe du distributeur.

Comme indiqué précédemment, l'intégration d'une cavité 60 dans laquelle débouche les orifices 64 de la plate-forme 62 et qui est obturée par une tôle 66 percée d'orifices 68, permet de réduire la vitesse de pénétration de la fraction d'air de contournement de la chambre qui est réintroduite par l'intermédiaire des orifices des plates-formes, ce qui permet que l'air réintroduit s'écoule au plus près des faces des plates-formes situées du côté des pales.

De plus, du fait que l'air de contournement réintroduit à l'intérieur de la veine annulaire a une vitesse réduite en comparaison de la technique antérieure, cet air est moins vite mélangé aux gaz chauds issus de la chambre de combustion, ce qui permet de réduire encore les hétérogénéités circonférentielles de température et ainsi de réaliser une meilleure uniformisation circonférentielle de la température du distributeur.

## Revendications

1. Distributeur sectorisé pour une turbine de turbomachine comprenant deux plates-formes annulaires sectorisées interne (62) et externe reliées par des pales (63) sensiblement radiales, au moins l'une de ces plates-formes (62) comportant au voisinage de son extrémité amont une pluralité d'orifices (64) traversants de passage d'air répartis sur la circonférence de ladite plate-forme (62), les orifices (64) de passage d'air de chaque secteur de plate-forme (62) débouchant à leurs extrémités opposées aux pales (63) dans une cavité (60) annulaire circonférentielle du secteur de plate-forme (62), cette cavité étant fermée et comportant des orifices (68) d'alimentation en air de refroidissement **caractérisé en ce que** les orifices (68) d'alimentation sont décalés circonférentiellement en quinconce par rapport aux orifices (64) de la plate-forme (62).

2. Distributeur selon la revendication 1, **caractérisé en ce que** les orifices (64) de la plate-forme (62) débouchent du côté des pales (63) en amont des bords d'attaque des pales (63).

3. Distributeur selon la revendication 1 ou 2, **caractérisé en ce que** les axes (80, 82) des orifices (64, 68) de la plate-forme (62) et de la cavité annulaire de chaque secteur de distributeur sont sensiblement situés dans un même plan perpendiculaire à l'axe longitudinal (78) du distributeur.

4. Distributeur selon l'une des revendications 1 à 3, **caractérisé en ce que** les orifices (64) de la plate-forme (62) et de la cavité annulaire de chaque secteur de distributeur sont régulièrement espacés les uns des autres.

5. Distributeur selon l'une des revendications précédentes, **caractérisé en ce que** le nombre d'orifices de la plate-forme (62) de chaque secteur de distributeur est égal au nombre d'orifices de la cavité annulaire de ce secteur de distributeur.

6. Distributeur selon l'une des revendications précédentes, **caractérisé en ce que** les orifices (64) de la plate-forme (62) de chaque secteur de distributeur ont un diamètre sensiblement identique au diamètre des orifices (68) de la cavité de ce secteur.

7. Distributeur selon l'une des revendications 1 à 6, **caractérisé en ce que** la cavité (60) est formée par une rainure ménagée dans l'épaisseur de la plate-forme (62) de chaque secteur de distributeur et fermée par une tôle (66) comportant les orifices précités (68).

8. Distributeur selon la revendication 7, **caractérisé en ce que** la tôle (66) est fixée par brasage ou soudage sur deux portées cylindriques de la plate-forme de chaque secteur de distributeur, situées respectivement en amont et en aval de la cavité.

9. Distributeur selon l'une des revendications précédentes, **caractérisé en ce que** la plate-forme (62) de chaque secteur de distributeur comprend à son extrémité amont une paroi radiale de fixation d'un moyen d'étanchéité, et **en ce que** la cavité (60) est située en aval de cette paroi radiale.

10. Turbomachine, telle qu'un turboréacteur ou un turbopropulseur d'avion, **caractérisée en ce qu'**elle comprend un distributeur de turbine selon l'une des revendications précédentes, agencé en sortie d'une chambre annulaire de combustion.

## Patentansprüche

1. Sektorisierter Leitapparat für eine Turbine einer Turbomaschine bzw. eines Turbinentriebwerks, enthaltend zwei sektorisierte, ringförmige Plattformen (62), nämlich eine innere und eine äußere, die über im Wesentlichen radial verlaufende Schaufelblätter (63) verbunden sind, wobei zumindest eine dieser Plattformen (62) nahe an ihrem stromaufwärtigen Ende eine Mehrzahl von durchgehenden Öffnungen (64) zum Luftdurchtritt aufweist, die über den Umfang der Plattform (62) verteilt sind, wobei die Öffnungen (64) für den Luftdurchtritt eines jeden Plattformsektors (62) an ihren den Schaufelblättern (63) entgegengesetzten Enden in einen ringförmigen Umfangshohlraum (60) des Plattformsektors (62) münden, wobei dieser Hohlraum geschlossen ist und Öffnungen (68) zur Kühlluftversorgung aufweist, **dadurch gekennzeichnet, dass** die Versorgungsöffnungen (68) gegenüber den Öffnungen (64) der Plattform (62) umfänglich auf Lücke versetzt angeordnet sind.

2. Leitapparat nach Anspruch 1, **dadurch gekennzeichnet, dass** die Öffnungen (64) der Plattform (62) auf der Seite der Schaufelblätter (63) stromaufwärts der Anströmkanten der Schaufelblätter (63) ausmünden.

3. Leitapparat nach Anspruch 1 oder 2, **dadurch gekennzeichnet, dass** die Achsen (80, 82) der Öffnungen (64, 68) der Plattform (62) und des ringförmigen Hohlraums eines jeden Leitapparatsektors im Wesentlichen in einer gleichen Ebene senkrecht zur Längsachse (78) des Leitapparats liegen.

4. Leitapparat nach einem der Ansprüche 1 bis 3, **dadurch gekennzeichnet, dass** die Öffnungen (64) der Plattform (62) und des ringförmigen Hohlraums eines jeden Leitapparatsektors gleichmäßig voneinander beabstandet sind.

5. Leitapparat nach einem der vorangehenden Ansprüche, **dadurch gekennzeichnet, dass** die Anzahl an Öffnungen der Plattform (62) eines jeden Leitapparatsektors gleich der Anzahl an Öffnungen des ringförmigen Hohlraums dieses Leitapparatsektors ist.

6. Leitapparat nach einem der vorangehenden Ansprüche, **dadurch gekennzeichnet, dass** die Öffnungen (64) der Plattform (62) eines jeden Leitapparatsektors im Durchmesser im Wesentlichen identisch zum Durchmesser der Öffnungen (68) des Hohlraums dieses Sektors sind.

7. Leitapparat nach einem der Ansprüche 1 bis 6, **dadurch gekennzeichnet, dass** der Hohlraum (60) aus einer in die Dicke der Plattform (62) eines jeden Leitapparatsektors eingebrachten Nut gebildet ist und mit einem Blech (66) verschlossen ist, das die vorgenannten Öffnungen (68) aufweist.

8. Leitapparat nach Anspruch 7, **dadurch gekennzeichnet, dass** das Blech (66) an zwei zylindrische Auflager der Plattform eines jeden Leitapparatsektors angelötet bzw. angeschweißt ist, die dem Hohlraum vorgelagert bzw. nachgelagert sind.

9. Leitapparat nach einem der vorangehenden Ansprüche, **dadurch gekennzeichnet, dass** die Plattform (62) eines jeden Leitapparatsektors an seinem stromaufwärtigen Ende eine radiale Wand zum Befestigen eines Dichtmittels aufweist und dass der Hohlraum (60) dieser radialen Wand nachgelagert ist.

10. Turbomaschine bzw. Turbinentriebwerk, wie etwa Turbostrahltriebwerk oder Turbopropellertriebwerk für Flugzeuge, **dadurch gekennzeichnet, dass** sie bzw. es einen Turbinenleitapparat nach einem der vorangehenden Ansprüche aufweist, der am Auslass einer ringförmigen Brennkammer angeordnet ist.

## Claims

1. A sectorized nozzle for a turbine engine turbine comprising an inner sectorized annular platform (62) and an outer sectorized annular platform connected together by substantially radial airfoils (63), at least one of the platforms (62) including a plurality of through orifices (64) for passing air in the neighborhood of its upstream end, the orifices being distributed over the circumference of said platform (62), the orifices (64) for passing air in each sector of a platform (62) opening out at their ends remote from the airfoils (63) into a circumferential annular cavity (60) of the sector of the platform (62), the cavity being closed and having cooling air feed orifices (68) **characterized in that** the orifices (68) are offset tangentially in a staggered configuration relative to the orifices (64) in the platform (62).

2. A nozzle according to claim 1, **characterized in that** the orifices (64) of the platform (62) open out beside the airfoils (63) upstream from the leading edges of the airfoils (63).

3. A nozzle according to claim 1 or claim 2, **characterized in that** the axes (80, 82) of the orifices (64, 68) in the platform (62) and in the annular cavity of each nozzle sector lie substantially in a common plane perpendicular to the longitudinal axis (78) of the nozzle.

4. A nozzle according to any one of claims 1 to 3, **characterized in that** the orifices (64) in the platform (62) and in the annular cavity of each nozzle sector are regularly spaced apart from one another.

5. A nozzle according to any preceding claim, **characterized in that** the number of orifices in the platform (62) of each nozzle sector is equal to the number of orifices in the annular cavity of the nozzle sector.

6. A nozzle according to any preceding claim, **characterized in that** the orifices (64) in the platform (62) of each nozzle sector are of a diameter substantially identical to the diameter of the orifices (68) in the cavity of the sector.

7. A nozzle according to any one of claims 1 to 6, **characterized in that** the cavity (60) is formed by a groove arranged in the thickness of the platform (62) of each nozzle sector and closed by a metal sheet (66) including the above-mentioned orifices (68).

8. A nozzle according to claim 7, **characterized in that** the sheet (66) is fastened by brazing or welding on two cylindrical bearing surfaces of the platform of each nozzle sector, which surfaces are situated respectively upstream and downstream relative to the cavity.

9. A nozzle according to any preceding claim, **characterized in that** the platform (62) of each nozzle sector includes a radial wall for fastening sealing means at its upstream end, and **in that** the cavity (60) is situated downstream from said radial wall.

10. A turbine engine, such as an airplane turboprop or turbojet, **characterized in that** it includes a turbine nozzle according to any preceding claim, arranged at the outlet from an annular combustion chamber.
